# EUROPÄISCHE PATENTSCHRIFT

(11) **EP 0 352 663 B1**
(45) Veröffentlichungstag und Bekanntmachung des Hinweises auf die Patenterteilung: **15.12.1993**
(21) Anmeldenummer: 89113468.6
(22) Anmeldetag: 21.07.1989
(51) Int. Cl.: B62K 19/16

(54) **Verfahren zur Herstellung einer Fahrradgabel und nach diesem Verfahren hergestellte Fahrradgabel**
Method for manufacturing a bicycle fork, and bicycle fork made by such a method
Procédé de fabrication d'une fourche de bicyclette et fourche de bicyclette fabriquée par un tel procédé

(30) Priorität: 25.07.1988 DE 3825245
(43) Veröffentlichungstag der Anmeldung: 31.01.1990
(73) Patentinhaber: Look S.A., 58004 Nevers cedex (FR)
(72) Erfinder: Bezin, Michel, F-58000 Nevers (FR); Van Raemdonck, Joris, B-2768 Bazel (Kruibeke) (BE)
(74) Vertreter: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(56) Entgegenhaltungen:
- EP-A- 0 230 839
- WO-A-87/06901
- FR-A- 2 464 876

## Beschreibung

Die Erfindung betrifft ein Verfahren zur Herstellung einer Fahrradgabel nach dem Oberbegriff des Patentanspruchs 1 sowie eine Fahrradgabel hergestellt durch dieses verfahren.

Es ist bereits bekannt (EP-A-0 127 553), die Rohre eines Fahrradrahmens aus übereinander angeordneten, zueinander konzentrischen Hüllen bzw. Schichten herzustellen, die aus kunststoffimprägnierten Faseranordnungen bestehen. Die Faseranordnungen können dabei in den einzelnen Hüllen unterschiedlich ausgebildet sein, wobei sowohl Hüllen mit parallel zur Achse und zueinander verlaufenden Fasern als auch Hüllen aus Faser-Geflechten und/oder Fasergeweben vorgesehen sein können. Nach dem übereinanderwickeln der einzelnen Hüllen werden die Rohlinge in geeigneten Formen erhitzt, wodurch die Kunststoffimprägnierung zunächst flüssig wird, um dann mit den Kunststoffimprägnierungen der benachbarten Hüllen zusammenzufließen und anschließend erhärten. Die üblichen Härtungstemperaturen liegen bei 120° bis 160°C.

Es ist auch schon bekannt geworden (EP-A-0 230 839), den Gabelkopf und die Gabelarme von Fahrradgabeln aus durch Textilmaterial verstärktem Kunstharz herzustellen. Das der Verstärkung dienende Textilmaterial besteht dabei wenigstens teilweise aus einer Übereinanderanordnung von Geflechten mit in zwei unterschiedlichen Richtungen verlaufenden Fasern, wobei zwischen diesen Geflechten sich in Längsrichtung erstreckende Fäden oder Fasern angeordnet sind. Die Herstellung der bekannten Fahrradgabel geht so vor sich, daß zunächst der Gabelkopf und die Gabelarme aus dem durch textiles Material verstärkten Harz in ihrer endgültigen Form einschließlich Aushärtung hergestellt werden und daß anschließend der aus Metall bestehende rohrförmige Lenkzapfen sowie die Achshalter nachträglich an dem Kunststoff-Grundkörper angebracht werden. Eine allen möglichen Beanspruchungen Rechnung tragende feste Verbindung zwischen den Metall- und Kunststoffteilen ist jedoch durch das bekannte Verfahren nicht oder nur mit hohem Montageaufwand zu erreichen. Da die Aufnahmebohrungen im Lenkzapfen sowie in den unteren Enden der Gabelarme im allgemeinen einen kreisförmigen Querschnitt haben, ist insbesondere die Verdrehsicherung der Metall- und Kunststoffteile relativ zueinander problematisch.

Das Ziel der vorliegenden Erfindung besteht somit darin, ein Verfahren der eingangs genannten Gattung und eine danach hergestellte Fahrradgabel zu schaffen, bei dem bzw. bei der die metall- bzw. faserverstärkten Kunststoffteile auf einfache und unkomplizierte Weise miteinander verbunden werden können, ohne daß beim späteren Gebrauch eine Lösung der miteinander verbundenen Teile befürchtet werden muß. Die Erfindung will also eine aus Metall und faserverstärkten Kunststoffteilen bestehende Fahrradgabel schaffen, die - obwohl aus ganz unterschiedlichen Materialien hergestellt - praktisch die Eigenschaften, d.h. insbesondere die Festigkeit und die Widerstandsfähigkeit, jedoch nicht das Gewicht einer herkömmlichen einstückigen Metallgabel hat.

Zur Lösung dieser Aufgabe sind die Merkmale des kennzeichnenden Teils des Patentanspruchs 1 vorgesehen. Der Erfindungsgedanke ist also darin zu sehen, daß die Verflüssigung und Aushärtung der Kunststoffimprägnierung der die Gabelarme und den Gabelkopf bildenden Hüllen erst erfolgt, nachdem die Verbindung mit dem rohrförmigen Metall-Lenkzapfen bzw. den Metall-Verbindungszapfen der Achshalter hergestellt worden ist. Da die endgültige Aushärtung unter der Pressung in einer Form und bevorzugt auch mittels eines Preßkolbens nach Anspruch 5 erfolgt, wird so eine denkbar innige Verbindung zwischen Metall- und Kunststoffteilen verwirklicht. Es entsteht so insgesamt eine Fahrradgabel in Kompositbauweise, die sich hinsichtlich ihrer Festigkeit und Widerstandsfähigkeit einer aus Metall bestehenden einstückigen Fahrradgabel sogar noch überlegen ist, gleichwohl aber ein ganz wesentlich herabgesetztes Gewicht aufweist.

Ein wesentliches Merkmal der vorliegenden Erfindung ist der bei der Herstellung verwendete längliche Formungskern, welcher einerseits ausreichend flexibel sein muß, um innerhalb der Form problemlos der Gestalt der Gabelarme und des Gabelkopfes angepaßt werden zu können, gleichwohl aber so steif gegenüber äußerem Druck ist, daß die einzelnen, um den Kern herumgelegten Hüllen problemlos aufgebracht werden können und bis zur Aushärtung die durch die äußere Form des Kernes vorgegebene Gestalt annehmen und beibehalten können.

Bei der Ausbildung des Formungskerns nach Anspruch 2 wird lediglich der sich im Bereich des Gabelkopfes befindende Teil aus flexiblem Kunststoff gefertigt, während in den im allgemeinen geradlinigen Gabelarmen Hartschaumkerne angeordnet sind.

Es ist jedoch auch möglich, den Formungskern nach Anspruch 3 einstückig auszubilden, wobei ein Entweichen des Innendrucks nach der Fertigstellung der Fahrradgabel nicht nachteilig ist, weil sämtliche beim späteren Gebrauch auftretenden Zug-, Druck-, Biege- und Torsionskräfte ausschließlich von den verschiedenen Hüllen aufgenommen werden.

Durch die Ausführungsform nach Anspruch 4 wird in dem Zwickelbereich, wo die beiden Gabelarme in den Gabelkopf übergehen, eine erhebliche Verstärkung insbesondere gegen eine Spreizung der Gabelarme herbeigeführt.

Eine besonders innige Verbindung zwischen dem Lenkzapfen und dem Gabelkopf wird durch die Maßnahmen der Ansprüche 6 und 7 erzielt, weil der untere Endbereich des Lenkzapfens hierdurch sowohl mit seiner Innenseite als auch mit seiner Außenseite in den Kunststoff des Gabelkopfes eingeformt wird.

Die Innigkeit der Verbindung und insbesondere eine einwandfreie, auch starken Belastungen widerstehende drehfeste Verbindung zwischen dem Lenkzapfen und dem Gabelkopf wird durch die Merkmale des Anspruches 8 gewährleistet. Eine besonders bevorzugte bauliche Weiterbildung dieser Ausführungsform ist im Anspruch 9 definiert. Besonders vorteilhaft ist dabei, daß der Kunststoff und teilweise auch die hüllenförmigen Faseranordnungen sich beim Preßvorgang in der Form bzw. durch den Preßkolben selbsttätig in die Verankerungsbohrungen hineindrücken bzw. hineinbewegen.

Durch die Erfindung wird also eine sich praktisch wie eine einstückige Fahrradgabel verhaltene Anordnung nach dem Patentanspruch 10 geschaffen. Während die Rippen zur einwandfreien Übertragung der Gewichts- und Stoßkräfte zweckmäßig sind, dient der unrunde Querschnitt der Verbindungszapfen dazu, Verdrehungen der Achshalter relativ zu den Gabelarmen um die Gabelarmachse wirksam zu vermeiden.

Bevorzugt ist zwischen den Verbindungszapfen und den unten aus den Gabelarmen vorstehenden Teilen der Achshalter eine sich radial nach außen erweiternde Stufe vorgesehen, die ebenfalls einer guten Abstützung der Achshalter an den Gabelarmen dient.

Die Erfindung wird im folgenden beispielsweise anhand der Zeichnung beschrieben; in dieser zeigt:
- Fig. 1: eine teilweise geschnittene Vorderansicht einer nach dem erfindungsgemäßen Verfahren hergestellten Fahrradgabel,
- Fig. 2: eine teilweise geschnittene vergrößerte Seitenansicht eines Achshalters 14 der Fahrradgabel nach Fig. 1 mit den angrenzenden Bereichen des zugeordneten Gabelarmes 13,
- Fig. 3: eine gegenüber Fig. 2 um 90° um die Achse verdrehte Seitenansicht des Achshalters ohne die angrenzenden Teile des zugeordneten Gabelarmes,
- Fig. 4: einen Schnitt nach Linie IV-IV in Fig. 2,
- Fig. 5: einen Schnitt nach Linie V-V in Fig. 2,
- Fig. 6: einen vergrößerten Querschnitt des Lenkzapfens 11 mit dem daran angeordneten Gabelkopf 12, und
- Fig. 7: eine teilsweise geschnittene vergrößerte Teilansicht analog Fig. 1 einer weiteren Ausführungsform einer nach dem erfindungsgemäßen Verfahren hergestellten Fahrradgabel.

In allen Figuren bezeichnen gleiche Bezugszahlen funktionell einander entsprechende Bauteile.

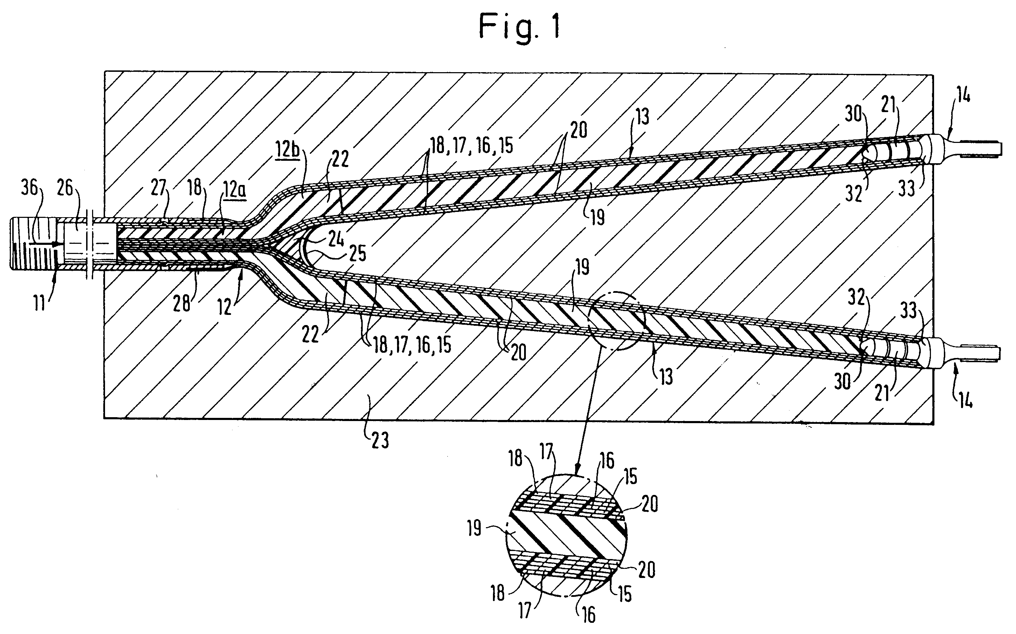

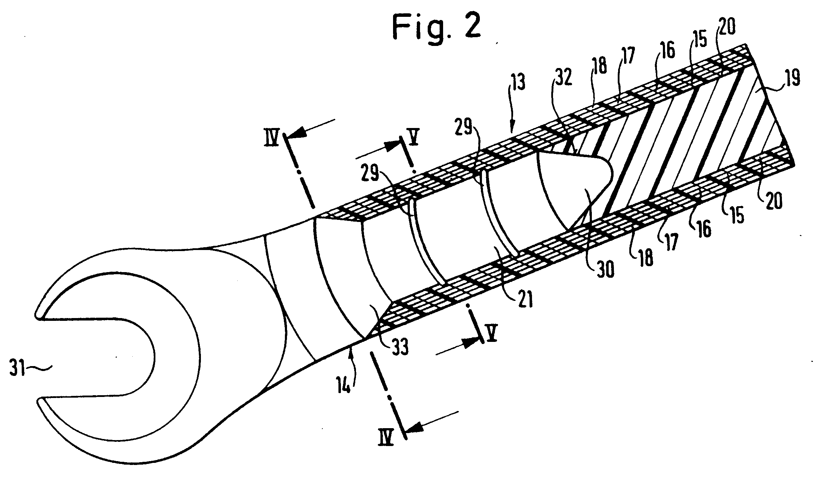

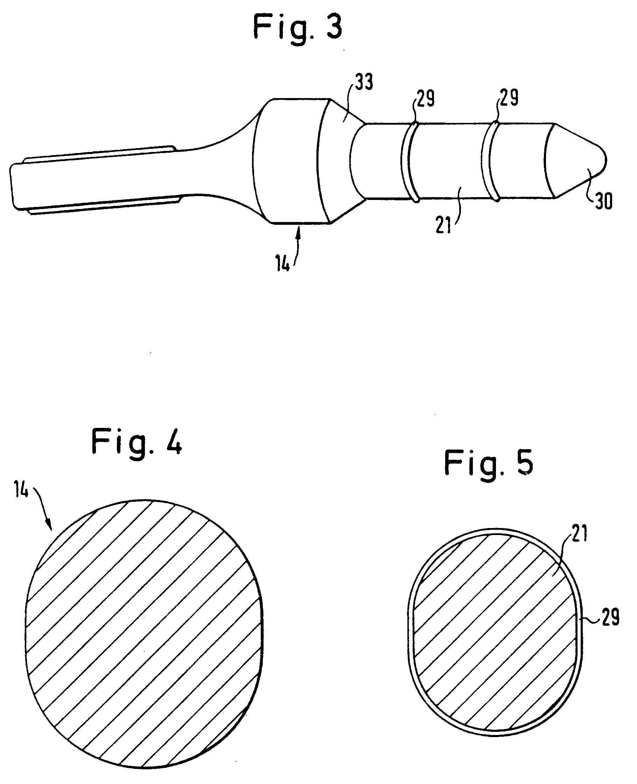

Nach Fig. 1 weist die erfindungsgemäße Fahrradgabel einen später in das nicht dargestellte Lenklager eines Fahrradrahmens einzusetzenden rohrförmigen Lenkzapfen 11 mit kreisförmigem Querschnitt auf, in dessen unteren Bereich der einen zum Innendurchmesser des Lenkzapfens 11 komplementäre Form aufweisende Lenkzapfenanschlußteil 12a eines Gabelkopfes 12 drehfest eingesetzt ist. Nach unten zu zweigen von dem Lenkzapfen-Anschlußteil 12a zwei Gabelarm-Übergangsteile 12b ab, die in die beiden Gabelarme 13 übergehen, in deren unteren Ende die gemäß Fig. 5 einen ovalen Querschnitt aufweisenden Verbindungszapfen 21 von Achshaltern 14 eingreifen, in deren Radachsen-Aufnahmeschlitze 31 (Fig. 2) später die nicht dargestellten Achsenenden der Achse eines Rades eingesetzt werden.

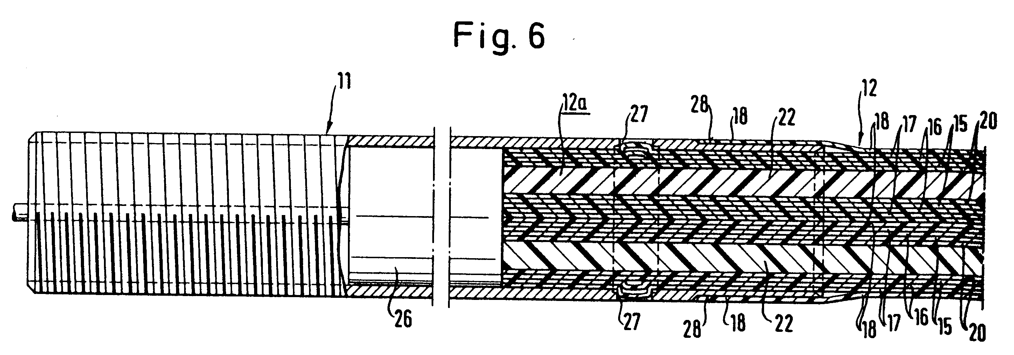

Nach den Fig. 1, 2 und 6 sind die Gabelarme 13 und der Gabelkopf 12 wie folgt aufgebaut:
Innerhalb der Gabelarme 13 ist im Anschluß an die Verbindungszapfen 21 jeweils als erster Bestandteil eines Formungskernes ein etwa den gleichen Durchmesser wie die Verbindungszapfen 21 aufweisender Hartschaumkern 19 vorgesehen, welcher mit einer zur abgerundeten Spitze 30 des Verbindungszapfens 31 komplementären Vertiefung 32 unmittelbar an den Verbindungszapfen 21 angrenzt und sich dann bis zum oberen Ende des praktisch geradlinigen Teils der Gabel erstreckt, wo die Gabelarme 13 in den Gabelkopf 12 überzugehen beginnen. In diesem Bereich schließt an den länglichen Hartschaumkern 19 als zweiter Bestandteil des Formungskernes ein im wesentlichen den gleichen Querschnitt aufweisender flexibler Schaumstoffkern 22 an, der über zwei entgegengesetzte Krümmungen sich bis in das untere Ende des Lenkzapfens 11 (Fig. 1, 6) hineinerstreckt.

Um die Kerne 19, 22 und die Verbindungszapfen 21 herum sind mehrere konzentrische, im wesentlichen der Querschnittsform der Gabelarme 13 bzw. des Gabelkopfes 12 angepaßte, kunststoffimprägnierte Hüllen aus bestimmten Faser- bzw. Fadenanordnungen wie folgt herumgelegt:

Eine erste Schaumstoff-Hülle 20 besteht aus sogenanntem syntaktischem Schaum. Das ist ein mit Glaskugeln versetztes Harz, welches zunächst flexibel ist, so daß es in jede gewünschte gekrümmte Form gebracht werden kann, jedoch noch Erhitzung zu einem starren Kunststoffkörper aushärtet. Aus dem gleichen Material besteht auch der flexible Schaumstoffkern 22.

Um die flexible Schaumstoffhülle 20 herum ist eine erste kunststoffimprägnierte Hülle mit einem Faser-bzw. Fadengeflecht oder -gewebe angeordnet, wobei die Winkel der Fäden- oder Fasern zweckmäßigerweise zwischen 30 und 90° liegen können. Die Winkelhalbierende soll in Richtung der Achse des Gabelkopfes 12 bzw. der Gabelarme 13 verlaufen.

Die radial nach außen anschließende Hülle 16 (Fig. 1, 2 und 6) besteht vorzugsweise aus parallel zur Achse und zueinander verlaufenden Fäden oder Fasern, die also in einer Ringanordnung um die Hülle 15 herumgelegt sind. Grundsätzlich kann aber auch für die Hülle 16 ein Gewebe mit unter 90° zueinander angeordneten Fäden oder Fasern verwendet werden, wobei die Fäden oder Fasern jedoch parallel bzw. unter rechtem Winkel zur Achse des Gabelkopfes 12 und der Gabelarme 13 verlaufen sollen.

Noch weiter radial außen ist eine ebenfalls kunststoffimprägnierte Hülle 17 vorgesehen, die wieder aus einem Geflecht oder Gewebe der gleichen Ausbildung und Anordnung wie die Hülle 15 besteht.

Schließlich kann fakultativ ganz außen um die vorstehend beschriebene Anordnung noch eine zusätzliche Abschluß-Hülle 18 vorgesehen sien, die entweder parallel zueinander und zur Achse verlaufende Fäden oder Faser oder eine Gewebe aufweist, das ebenfalls kunststoffimprägniert ist. Alle Hüllen bestehen aus dem syntaktischen Schaum.

Nach Fig. 1 ist in den Zwickel, wo die beiden Gabelarme 13 in den Gabelkopf 12 übergehen noch ein flexibler Schaumstoffzwickel 24 eingesetzt, der aus dem gleichen syntaktischen Schaum wie die Schaumstoff-Hülle 20 und der flexible Schaumstoffkern 22 besteht. Unterhalb des Scahumstoffzwickels 24 ist eine kunststoffimprägnierte, sattelförmige Zwickelhülle 25 als Verstärkung eingesetzt, welche zweckmäßig aus einem mit syntaktischem Schaum imprägnierten Geflecht oder Gewebe von Fasern oder Fäden besteht. Die Enden der Zwickelhülle 25 sind an die äußere Hülle 17 bzw. 18 Gabelarme 13 bzw. des Gabelkopfes 12 angeformt.

Nach den Fig. 1 und 6 weist der Lenkzapfen 11 in seinem unteren Bereich radial außen eine Umfangsvertiefung 28 auf, in die die äußere Hülle 18 des Gabelkopfes 12 eingelegt ist. Die übrigen Teile der Lenkzapfen-Anschlußteile 12a sind innerhalb des unteren Endbereiches des Lenkzapfens 11 untergebracht.

Oberhalb der Vertiefung 28 besitzt der Lenkzapfen 11 noch im Bereich des Lenkzapfen-Anschlußteils 12a einen konzentrischen Kranz von durchgehenden Verankerungs-Bohrungen 27, in die hinein sich zumindest die im Innern des Lenkzapfens 11 befindliche äußerste Hülle 17 mit der Kunststoffimprägnierung hineinerstreckt.

Nach den Fig. 1, 2 und 3 weisen die Achshalter 14 am Übergang von dem aus den Gabelarmen 13 vorstehenden Teil zum Verbindungszapfen 21 eine sich konisch nach oben verjüngende Umfangsstufe 33 auf, an die der Verbindungszapfen 21 anschließt. Der Verbindungszapfen 21 ist mit ringförmigen Umfangsrippen 29 versehen, denen schließlich die abgerundete Spitze 30 folgt.

Nach den Fig. 4 und 5 besitzen der Verbindungszapfen 21 une der Achshalter 14 im Bereich der Umfangsstufe 33 einen ovalen Querschnitt, der praktisch durch zwei Halbkreise und kurze geradlinige Verbindungsstücke verwirklicht ist.

Die Kunststoffimprägnierung der Kerne 19, 22 sowie der Hüllen 15, 16, 17, 18 und 20 besteht vorzugsweise aus einem Kunststoff, der für die Verarbeitung flexibel und ungehärtet ist, bei Erhitzung zunächst flüssig wird, um erst im Anschluß daran zu verfestigen.

Die Herstellung der beschriebenen Fahrradgabel geht wie folgt vor sich:
Zunächst werden aus den Hartschaumkernen 19 und den flexiblen Schaumstoffkernen 22 zwei bereits die endgültige Längenabmessung der Gabel bestimmende längliche Gebilde vorgefertigt, die dann am unteren Ende durch die Achshalter 14 vervollständigt werden. Um diese Basisanordnung herum werden dann die Hüllen 20, 15, 16, 17 und 18 einfach herumgelegt.

Am oberen Ende werden dann die beiden länglichen Gebilde zum Lenkzapfen-Anschlußteil 12a zusammengefaßt und nach entsprechender Zuschneidung der außen in die Vertiefung 28 hineinzulegenden Hülle 18 von unten in den hohlen Lenkzapfen 11 bis zu einer Stelle deutlich oberhalb der Verankerungs-Bohrungen 27 eingeführt. Dabei kommen auf der Achse des Lenkzapfens 11 die äußeren Hüllen 18 aufeinander zu liegen, und zwar im wesentlichen entlang einer Ebene, die in der Mitte zwei Halbzylinder verbindet. Die äußere Hülle 18 wird über das untere Ende des Lenkzapfens 11 gezogen und in die Vertiefung 28 eingelegt.

Anschließend werden der Schaumstoffzwickel 24 und die Zwickelhülle 25 eingelegt.

Der so hergestellte Rohling wird dann in die der endgültigen Gabelform angepaßte Form 23 eingelegt. Das Einlegen in die Form 23 kann jedoch auch schon vorher während der Zusammenstellung der Einzelteile bzw. Hüllen, erfolgen.

Nachdem das Einlegen in der aus Fig. 1 ersichtlichen Weise in die Form 23 erfolgt ist, wird die Form geschlossen, und es wird von der Oberseite her ein Preßkolben 26 in den Lenkzapfen 11 eingeführt, dessen Querschnitt den Innenabmessungen des Lenkzapfens 11 entspricht.

In Richtung des Pfeiles 36 (Fig. 1) wird dann von oben her ein geeigneter Preßdruck auf das Lenkzapfen-Anschlußteil 12a ausgeübt. Der Gegendruck wird von der Form 23 über die Gabelarme 13 und insbesondere die Zwickelhülle 25 ausgeübt.

Anschließend wird dann die Form 23 auf eine Temperatur von beispielsweise 120 bis 160° erhitzt, worauf die in geeigneter Weise in den Kernen 19, 22 bzw. den Hüllen 15, 16, 17, 18 bzw. 20 vorgesehenen Kunstharzimprägnierungen zunächst weich, insbesondere flüssig werden, um dann etwaige, in der Form noch vorhandene Hohlräume auszufüllen. Hierzu trägt insbesondere der durch den Preßkolben 26 ausgeübte Axialdruck bei, welcher außerdem dazu führt, daß die im Lenkzapfen 11 befindliche äußere Hülle 17 mit dem Imprägnierungskunstharz teilweise in die Verankerungs-Bohrungen 27 gedrückt wird. Die äußere Hülle 18 wird durch die Form 23 von außen in die Vertiefung 28 eingepreßt. Weiter werden durch die Form die verschiedenen Hüllen an den Verbindungszapfen 21 bzw. die Umfangsstufe 33 der Achshalter 14 gepreßt.

Nachdem der Kunststoff aufgrund des Preßdruckes sämtliche Hohlräume der Form 23 ausgefüllt hat, beginnt der Härtungsprozeß, der nach 1 bis 2 Stunden abgeschlossen ist.

Nunmehr kann die fertiggestellte Fahrradgabel aus der Form 23 herausgenommen werden. Die Metall- und Kunststoffteile sind aufgrund des beschriebenen Herstellungsverfahrens derart fest und insbesondere drehfest miteinander verbunden, daß die Festigkeit gegen ein Lösen der verschiedenen Teile praktisch so gut wie bei einer einstückig hergestellten Fahrradgabel ist.

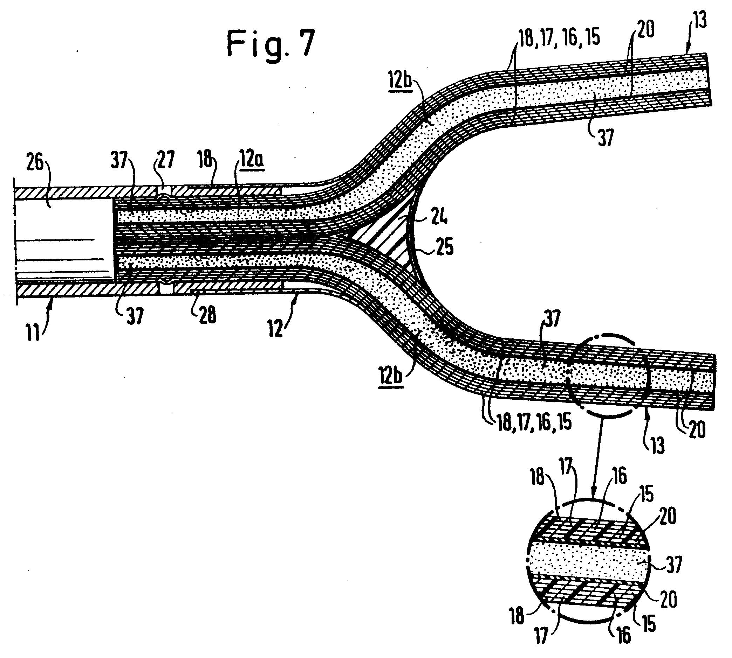

Die Fahrradgabel nach Fig. 7 unterscheidet sich von dem vorangehend beschriebenen Ausführungsbeispiel dadurch, daß statt der Hartschaumkerne 19 und der anschließenden flexiblen Schaumstoffkerne 22 zwei von den Verbindungszapfen 21 bis zum oberen Ende des Lenkzapfens 11 durchgehende, unter innerem Druck stehende und an beiden Enden verschlossene flexible Kernschläuche 37 als Formungskern vorgesehen sind, um die herum die verschiedenen Hüllen 20, 15, 16, 17, 18 angeordnet sind. Nach der Aushärtung der verschiedenen Hüllen hat der lediglich dem Aufbau dienende Schlauch 37 keine Funktion mehr, so daß das Entweichen des Innendrucks im Laufe der Zeit sich nicht nachteilig auswirkt. Die tragenden Kräfte werden ausschließlich von den Hüllen 15, 16, 17, 18 und 20 aufgenommen.

Für die faserverstärkten Hüllen 15, 16, 17, 18 werden mit besonderem Vorteile textile Produkte, die mit härtbaren Reaktionsharzen imprägniert sind, verwendet. Es kommen im einzelnen als Verstärkungsfasern in Frage Glas-, Aramid-, Carbon- und Graphitfasern und als Kunststoffimprägnierung Epoxid-, Polyimid-, ungesättigte Polyester- und Phenolharze. Die fertiggestellten Hüllen sollen wenigstens 60 Vol.-% Fasern enthalten.

Wichtig ist, daß die Form 23 heizbar ist, damit die in die Form eingelegten Bauteile warm verpreßt werden können. Der Aushärtungsprozeß dauert normalerweise 0,5 bis 2 Stunden. Eine mehrstündige Nachwärmebehandlung ist empfehlenswert. Gegebenenfalls kann die Härtung auch in einem Autoklaven unter entsprechender Verdichtung durchgeführt werden. Zweckmäßigerweise wird vor der Temperaturerhöhung ein Vakuum an die Form angeschlossen, um eine Entlüftung durchzuführen. Anschließend wird dann während des Bestehens der erhöhten Temperatur der Druck im Autoklaven auf beispielsweise 4 bis 6 bar erhöht, und zwar vorzugsweise für ein bis zwei Stunden.

## Patentansprüche

1. Verfahren zur Herstellung einer Fahrradgabel mit einem aus Metall, insbesondere Stahl, bestehenden rohrförmigen Lenkzapfen (11), einem aus faserverstärktem Kunststoff bestehenden, mit dem Lenkzapfen (11) drehfest verbundenen Gabelkopf (12), zwei mit dem Gabelkopf (12) einstückig ausgebildeten, ebenfalls aus faserverstärktem Kunststoff bestehenden Gabelarmen (13) und in das freie Ende der Gabelarme (13) drehfest eingesetzten Verbindungszapfen (21) von aus Metall, insbesondere Stahl, bestehenden Achshaltern (14), wobei der Gabelkopf (12) und die Gabelarme (13) mehrere un ihre Achse herumgelegte Hüllen (15, 16, 17, 18) aus kunststoffinprägnierten Faserbündeln aufweist, die entweder nur aus einer Gruppe von parallel zueinander und zur Achse verlaufenden Fasern oder aus zwei Gruppen von parallel zueinander und zur Achse verlaufenden Fasern, die unter einem Winkel von bis zu 90° zueinander angeordnet sein können, bestehen,
dadurch **gekennzeichnet,**
daß die Verbindungszapfen (21) durch einen später in jedem Gabelarm (13) und dem Gabelkopf (12) angeordneten, zumindest im Bereich des Gabelkopfes (12) flexiblen Formungskern (19,22; 37) verlängert werden, welcher sich bis zum oberen Ende des Gabelkopfes (12) erstreckt, daß um die Verbindungszapfen (21) und den Formungskern (19,22; 37) herum eine kunststoffimprägnierte flexible Schaumstoffhülle (20) herumgelegt wird, daß anschließend die verschiedenen faserverstärkten Hüllen (15, 16, 17, 18) um die Schaumstoffhülle (20) herumgelegt werden, daß dann der oberen Teil des den flexiblen Schaumstoffkern (22) enthaltenden Gabelkopfes (12) zu einem einzigen Lenkzapfen-Auschlußteil (12a) zusammengefaßt und zumindest im wesentlichen in Paßform in das untere Ende des Lenkzapfens (11) eingeführt wird, und daß der so vorbereitete Rohling in einer heizbaren, der gewünschten Fahrradgabelform entsprechenden Form in die endgültige Fahrradgabelform gebracht wird, worauf die Form auf die für die Verflüssigung und anschließende Härtung der Kunststoffimprägnierungen erforderlichen Temperatur gebracht und bis zur Aushärtung der Kunststoffimprägnierungen auf dieser Temperatur gehalten wird, worauf die Ausformung erfolgt.

2. Verfahren nach Anspruch 1,
dadurch gekennzeichnet,
daß der Formungskern (19, 22) durch einen später in jedem Gabelarm (13) angeordneten Hartschaumkern (19) und einen oben unmittelbar daran anschließenden, im Gabelkopf (12) befindlichen kunststoffimprägnierten flexiblen Schaumstoffkern (22) gebildet wird.

3. Verfahren nach Anspruch 1,
dadurch gekennzeichnet,
daß der Formungskern (37) durch einen an beiden Enden dicht verschlossenen, unter innerem Druck stehenden Kernschlauch (37) gebildet wird.

4. Verfahren nach einem der vorhergehenden Ansprüche,
dadurch **gekennzeichnet,**
daß in dem Zwickel, wo die beiden Gabelarme (13) zusammenlaufen, ein der Form des Zwickels angepaßter, kunststoffimprägnierter, flexibler Schaumstoffzwickel (24) eingesetzt wird, der durch eine faserverstärkte, sattelförmige Zwickelhülle (25) abgedeckt ist, die vorzugsweise mit ihren an den Gabelarmen (13) bzw. dem Gabelkopf (12) mündenden Enden an die äußerste Hülle (17 oder 18) der Gabelarme (13) angelegt ist.

5. Verfahren nach einem der vorhergehenden Ansprüche,
dadurch **gekennzeichnet,**
daß während der Pressung des Rohlings in der Form (23) von der offenen Oberseite des Lenkzapfens (11) her ein Preßkolben (26) gegen die Oberseite des Lenkzapfen-Anschlußteils (12a) gedrückt wird.

6. Verfahren nach einem der vorhergehenden Ansprüche,
dadurch **gekennzeichnet,**
daß die äußerste Hülle (17 oder 18) mit ihrem oberen Ende von außen um den unteren Endbereich des Lenkzapfens (11) herumgelegt ist.

7. Verfahren nach Anspruch 6,
dadurch **gekennzeichnet,**
daß der Lenkzapfen (11) in dem betreffenden unteren Endbereich außen eine Vertiefung (28) zur Aufnahme der äußeren Hülle (17 oder 18) aufweist.

8. Verfahren nach einem einem der vorhergehenden Ansprüche,
dadurch **gekennzeichnet,**
daß der Lenkzapfen (11) im unteren Bereich über den Umfang verteilt vorzugsweise durchgehende Bohrungen (27) aufweist und vor oder bei der Erhitzung die kunststoffimprägnierten Hüllen (15, 16, 17) zumindest teilweise in die Bohrungen (27) hineingepreßt werden.

9. Verfahren nach Anspruch 6, 7 oder 8,
dadurch **gekennzeichnet,**
daß die Bohrungen (27) als zur Lenkzapfenachse konzentrischer Bohrungskranz oberhalb des Bereiches, wo die äußerste Hülle (17, 18) außen über den Lenkzapfen (11) gezogen ist, vorgesehen sind.

10. Fahrradgabel, hergestellt durch das Verfahren nach einem der vorhergehenden Ansprüche.

11. Fahrradgabel nach Anspruch 10,
dadurch **gekennzeichnet,**
daß der Verbindungszapfen (21) des Achshalters (14) Umfangsrippen (29) aufweist.

12. Fahrradgabel nach einem der Ansprüche 10 und 11,
dadurch **gekennzeichnet,**
daß der Verbindungszapfen (21) des Achshalters (14) eine dem Gabelarm (13) zugewandte, sich verjüngende abgerundete Spitze (30) aufweist.

13. Fahrradgabel nach einem der Ansprüche 10 bis 12,
dadurch **gekennzeichnet,**
daß die Verbindungszapfen (21) einen unrunden Querschnitt haben.

## Claims

1. Method of manufacturing bicycle fork comprising a tubular steering spigot (11) of metal, in particular of steel; a fork head (12) consisting of fibre-reinforced plastic and rotationally fixedly connected to the steering spigot (11); two fork arms (13) which are formed in one piece with the fork head (12) and which are likewise of fibre-reinforced plastic; and connection spigots (21) of axle mounts (14) of metal, in particular of steel, the connection spigots (21) being inserted in rotationally fixed manner into the free end of the fork arms (13); wherein the fork head (12) and the fork arms (13) have a plurality of coverings (15, 16, 17, 18) of plastic-impregnated fibre bundles which are laid around their axes and which consist either of only one group of fibres which extend parallel to one another and to the axis, or of two groups of fibres which extend parallel to one another and to the axis, and which can be arranged at an angle of up to 90° to one another,
**characterized in that** the connection spigots (21) are extended by a moulding core (19, 22; 37) which is later arranged in each fork arm (13) and in the fork head (12) and which is flexible at least in the region of the fork head (12), with the moulding core (19, 22; 37) extending up to the upper end of the fork head (12);
in that a plastic-impregnated flexible foam covering (20) is laid around the connection spigots (21) and the moulding core (19, 22; 37); in that the various fibre-reinforced coverings (15, 16, 17, 18) are subsequently laid around the foam covering (20);
in that the upper part of the fork head (12) containing the flexible foam core (22) is then combined into a single steering spigot connection part (12a) and is inserted at least substantially in a matching shape into the lower end of the steering spigot (11);
and in that the blank prepared in this way is brought into the final bicycle fork shape in a heatable mould corresponding to the desired bicycle fork shape, whereupon the mould is brought to the temperature required for the liquifaction and subsequent hardening of the plastic impregnations and is held at this temperature until the plastic impregnations have hardened out, whereupon removal from the mould takes place.

2. Method in accordance with claim 1,
characterized in that the mould core (19, 22) is formed by a hard foam core (19) which is later arranged in each fork arm (13) and by a plastic-impregnated flexible foam core (22) which directly adjoins the hard foam core (19) at the top and is located in the fork head (12).

3. Method in accordance with claim 1,
characterized in that the mould core (37) is formed by a core hose (37) which is sealingly closed at both ends and stands under internal pressure.

4. Method in accordance with one of the preceding claims, characterized in that a plastic-impregnated flexible foam material crutch piece (24) is inserted into the crutch where the two fork arms (13) converge, with the crutch piece (24) being covered by a fibre-reinforced saddle-shaped crutch covering (25) which is preferably applied at its margins terminating at the fork arms (13) or at its margins terminating the fork head (12) onto the outermost covering (17 or 18) of the fork arms (13) respectively.

5. Method in accordance with one of the preceding claims, characterized in that, during the pressing of the blank in the mould (23), a press piston (26) is pressed against the upper side of the steering spigot connection part (12a) coming from the open upper side of the steering spigot (11).

6. Method in accordance with one of the preceding claims, characterized in that the upper end of the outermost covering (17 or 18) is laid from the outside around the lower end region of the steering spigot (11).

7. Method in accordance with claim 6,
characterized in that the steering spigot (11) has a recess (28) in the relevant lower end region at the outside for taking up the outer covering (17 or 18).

8. Method in accordance with one of the preceding claims, characterized in that in the lower region the steering spigot (11) has bores (27) which are preferably through-going and which are distributed around the circumference; and in that the plastic-impregnated coverings (15, 16, 17) are pressed at least partially into the bores (27) prior to or during the heating.

9. Method in accordance with claims 6, 7 or 8,
characterized in that the bores (27) are provided as a concentrically disposed ring of bores above the region where the outermost covering (17, 18) is drawn outwardly over the steering spigot (11).

10. Bicycle fork manufactured by the method in accordance with one of the preceding claims.

11. Bicycle fork in accordance with claim 10,
characterized in that the connection spigot (21) of the axle mount (14) has circumferential ribs (29).

12. Bicycle fork in accordance with one of the claims 10 and 11, characterized in that the connection spigot (21) of the axle mount (14) has a tapered and rounded-off tip (30) facing the fork arm (13).

13. Bicycle fork in accordance with one of the claims 10 to 12, characterized in that the connection spigots (14) have a non-round cross-section.

## Revendications

1. Procédé de fabrication d'une fourche de bicyclette, munie d'un tourillon de direction (11) tubulaire fait de métal, en particulier d'acier, d'une tête de fourche (12) faite d'une matière plastique renforcée de fibres et fixée sans possibilité de rotation au tourillon de direction (11), de deux bras de fourche (13) également faits d'une matière plastique, renforcée de fibres et formant une pièce avec la tête de fourche (12) et de tenons de liaison (21), introduits sans possibilité de rotation dans l'extrémité libre des bras de fourche (13), de supports d'axe (14) faits de métal, en particulier d'acier, la tête de fourche (12) et les bras de fourche (13) étant enveloppés autour de leur axe de plusieurs enveloppes (15,16,17,18), composées de faisceaux de fibres, imprégnés de matière plastique et composés soit d'un seul groupe de fibres parallèles entre elles et parallèles à l'axe, soit de deux groupes de fibres parallèles entre elles et parallèles à l'axe et qui peuvent être disposés sous un angle jusqu'à 90° les unes par rapport aux autres,
caractérisé en ce que,
les tenons de liaison (21) sont allongés par un noyau de façonnage (19,22;37), ultérieurement disposé dans chaque bras de fourche (13) et dans la tête de fourche (12), et souple au moins au niveau de la tête de fourche (12), noyau de façonnage qui s'étend jusqu'au bout supérieur de la tête de fourche (12) ; en ce qu'autour des tenons de liaison (21) et du noyau de façonnage (19,22;37) est disposée une enveloppe souple de mousse imprégnée de matière plastique ; en ce que plusieurs enveloppes (15,16,17,18) renforcées de fibres sont ensuite disposées autour de l'enveloppe de mousse (20) ; en ce que la partie supérieure de la tête de fourche (12) contenant le noyau souple de mousse (22) est alors ramassée sous forme d'une seule partie de raccord (12a) du tourillon de direction et disposée dans l'extrémité inférieure du tourillon de direction (11), en s'y adaptant étroitement au moins en grande partie ; et en ce que la pièce brute ainsi obtenue reçoit sa forme de fourche de bicyclette définitive par façonnage dans un moule qu'on peut chauffer répondant à la forme de fourche de bicyclette désirée ; après quoi le moule est porté par chauffage à la température nécessaire pour la fusion et le durcissement subséquent des matières plastiques d'imprégnation et est maintenu à cette température jusqu'au durcissement des matières plastiques d'imprégnation: ce qui résulte au formage.

2. Procédé selon la revendication 1,
caractérisé en ce que
le noyau de façonnage (19,22) est formé par un noyau de mousse dure (19), disposé ultérieurement dans chaque bras de fourche (13), et d'un noyau souple de mousse (22) imprégné d'une matière plastique en haut y directement adjacent et situé dans la tête de fourche (12).

3. Procédé selon la revendication 1,
caractérisé en ce que
le noyau de façonnage (37) est formé par un tuyau à âme (37) se trouvant sous pression intérieure et étanchement fermé à chacune de ses deux extrémités.

4. Procédé selon l'une quelconque des revendications précédentes,
caractérisé en ce que
dans le coin où les deux bras de fourche (13) se rencontrent est disposé un coin souple de mousse (24), imprégné d'une matière plastique et adapté à la forme du coin et qui est recouvert d'une enveloppe de coin (25) en forme de selle et renforcée de fibres qui s'applique de préférence à l'enveloppe extérieure (17 ou 18) des bras de fourche (13) avec ses extrémités qui se terminent au niveau des bras de fourche (13) ou de la tête de fourche (12).

5. Procédé selon l'une quelconque des revendications précédentes,
caractérisé en ce que
pendant la compression de la pièce brute dans le moule (23), un piston de compression (26) est, à partir du côté supérieur ouvert du tourillon de direction (11), pressé contre le côté supérieur de la partie de raccord (12a) du tourillon de direction.

6. Procédé selon l'une quelconque des revendications précédentes,
caractérisé en ce que
l'enveloppe extérieure (17 ou 18) est disposée avec sa partie supérieure autour de la partie inférieure du tourillon de direction (11).

7. Procédé selon la revendication 6,
caractérisé en ce que
la partie inférieure concernée du tourillon de direction(11) présente à l'extérieur une dépression (28) destinée à recevoir l'enveloppe extérieure (17 ou 18).

8. Procédé selon l'une quelconque des revendications précédentes,
caractérisé en ce que
le tourillon de direction (11) présente dans sa partie inférieure d'alésages (27) distribués sur la périphérie allant de préférence de part en part, dans lesquels sont pressées au moins partiellement les enveloppes (15,16,17) imprégnées de matière plastique avant ou pendant le réchauffement.

9. Procédé selon la revendication 6, 7 ou 8,
caractérisé en ce que les alésages (27) se présentent sous forme d'une couronne d'alésages concentriques avec l'axe du tourillon de direction au-dessus de la zone où l'enveloppe extérieure (17,18) est glissée sur la surface extérieure du tourillon de direction (11).

10. Fourche de bicyclette, fabriquée par le procédé suivant l'une des revendications précédentes.

11. Fourche de bicyclette selon la revendication 10, caractérisée en ce que le tenon de liaison (21) des supports d'axes (14) présentent des nervures périphériques (29).

12. Fourche de bicyclette selon l'une des revendications 10 et 11, caractérisée en ce que le tenon de liaison (21) des supports d'axes (14) présente une pointe arrondie (30) allant en se rétrécissant, orientée vers le bras de fourche (13).

13. Fourche de bicyclette selon l'une des revendications 10 à 12, caractérisée en ce que le tenon de liaison (21) présente une section transversale non circulaire.
